# EUROPEAN PATENT APPLICATION

(11) **EP 1 767 603 A1**
(43) Date of publication of application: **28.03.2007**
(21) Application number: 05727051.4
(22) Date of filing: 22.03.2005
(51) Int. Cl.: C09J 7/02, B32B 27/16

(54) **LAMINATED SHEET AND PROCESS FOR PRODUCING THE SAME**

(30) Priority: 21.06.2004 JP 2004182967
(71) Applicant: Lintec Corporation, Tokyo 173-0001 (JP)
(72) Inventor: KUBOTA, Shin, c/o Lintec Corporation, Tokyo 1730001 (JP); KATOH, Kazuya, c/o Lintec Corporation, Tokyo 1730001 (JP); MIYATA, Sou, c/o Lintec Corporation, Tokyo 1730001 (JP)
(74) Representative: Nicholls, Michael John
(86) International application number: PCT/JP2005/005107
(87) International publication number: WO 2005/123861

(57) **Abstract**

A laminated sheet 1A' is produced in which target sheets 301A of a predetermined shape constituted from an adhesive/curable layer 31A made of an energy ray-curable material and a substrate 32A are provided on a width-direction central portion of a release surface of a long release sheet 2A, and a protective portion constituted from the substrate 32A and a protective member 41A is provided via the adhesive/curable layer 31A made of the energy ray-curable material on both side portions in width-direction of the release surface of the release sheet 2A; the energy ray-curable material is cured at both edges in width-direction of the laminated sheet 1A' before rolling up the laminated sheet 1A' . As a result, oozing out of an adhesive/curable material of the adhesive/curable layer 31A from the both edges in width-direction of the laminated sheet 1A' when the laminated sheet 1A' is rolled up can be prevented.

## Description

### TECHNICAL FIELD

The present invention relates to a laminated sheet in which a layer (hereinafter referred to as an "adhesive/curable layer") made of a material that is adhesive and/or curable (hereinafter referred to as an "adhesive/curable material") and a substrate are laminated on a long release sheet, and a method of producing the same, and in particular relates to a laminated sheet according to which oozing out of the adhesive/curable material from both edges in width-direction of the laminated sheet when the laminated sheet is rolled up can be prevented, and a method of producing the same.

### BACKGROUND ART

It is common for a laminated sheet in which an adhesive layer and a substrate are (or an adhesive sheet comprising these is) laminated on a long release sheet to be rolled up, and transported/stored in the form of a roll. When such a laminated sheet has been made into a roll, the laminated sheet is subjected to roll pressure, and in general because the adhesive layer is softer than the other layers, the adhesive may ooze out from both edges in width-direction of the laminated sheet.

If the adhesive oozes out from the both edges in width-direction of the laminated sheet in this way, then problems may arise in that a rolling shaft is soiled by the oozed out adhesive, or the oozed out adhesive becomes foreign matter which contaminates the adhesive sheet.

In Japanese Patent Application Laid-open No. 2002-338904, there is disclosed an invention in which an ultraviolet ray-curable adhesive sheet is cut, and then in a state with the adhesive sheet having been rolled up into a roll, the cut part of the adhesive sheet is cured with ultraviolet rays; however, with this roll type adhesive sheet, the adhesive may already have oozed out from the cut part of the adhesive sheet when the adhesive sheet is rolled up, and hence even if this oozed out adhesive is cured, the problem of the cured adhesive contaminating the adhesive sheet still remains, and furthermore a problem also arises in that through the curing of the oozed out adhesive, sections of the adhesive sheet rolled up on one another become bonded to one another, and hence rolling out the adhesive sheet from the roll becomes difficult.

Meanwhile, for such a laminated sheet, as shown in Japanese Utility Model Publication No. 6-18383, the substrate and the adhesive layer may be cut to a predetermined shape, and used as an adhesive sheet having a predetermined shape. In the case that this adhesive sheet is used, for example, as an optical disk cover sheet or the like, a problem may arise in that, due to the roll pressure when the adhesive sheet is rolled up, one cover sheet is marked by the outline of another cover sheet (i.e. with an arc-shaped mark), or the adhesive layer deforms over time into a so-called orange-peel state, so that minute thickness irregularities arise in the adhesive layer; as a result, errors may arise in reading/writing of data from/to the optical disk obtained.

To resolve the above problems caused by the roll pressure, one could conceive of making the thickness of portions other than the adhesive sheet used for cover sheets or the like (both side portions in width-direction of the laminated sheet) greater than the thickness of the adhesive sheet portion so as to reduce the roll pressure to which the adhesive sheet is subjected. However, in this case, the roll pressure on the both side portions in width-direction of the laminated sheet is locally increased, and hence the amount of the adhesive oozing out from the both edges in width-direction of the laminated sheet is increased.

### DISCLOSURE OF THE INVENTION

### PROBLEM TO BE SOLVED BY THE INVENTION

The present invention has been devised in view of the above state of affairs; it is an object of the present invention to provide a laminated sheet according to which oozing out of the adhesive/curable material of an adhesive/curable layer from both edges in width-direction of the laminated sheet when the laminated sheet is rolled up can be prevented, and a method of producing the same.

### MEANS FOR SOLVING THE PROBLEM

To attain the above object, firstly, the present invention provides a method of producing a laminated sheet comprising a long release sheet, an adhesive/curable layer that is laminated on a release treatment-subjected surface of the release sheet and has at least a portion made of an energy-ray curable material positioned at both edges in width-direction of the release sheet, and a substrate that is laminated on the adhesive/curable layer, the method of producing a laminated sheet being characterized by curing the energy ray-curable material positioned at both edges in width-direction of the adhesive/curable layer before rolling up the laminated sheet (invention 1). Note that "substrate" in the present specification may be a sheet made of a desired material, or may be a release sheet.

An adhesive/curable layer made of an adhesive/curable material is generally softer than other layers (release sheet, substrate), and hence when a laminated sheet comprising these layers is rolled up so that the laminated sheet is subjected to roll pressure, the adhesive/curable material tends to ooze out from both edges in width-direction of the laminated sheet; however, for the laminated sheet according to the above invention (invention 1), the energy ray-curable material is cured at each of the both edges in width-direction of the adhesive/curable layer before the laminated sheet is rolled up, and hence the cured energy ray-curable material acts as a stopper, so that oozing out of the adhesive/curable material as described above is prevented.

In the case of the above invention (invention 1), a protective member may be provided at a desired stage on the substrate at both side portions in width-direction of the substrate or on a rear surface of the release sheet at both side portions in width-direction of the release sheet (invention 2). Note that "the rear surface of the release sheet" in the present specification means the surface of the release sheet on the opposite side to the release treatment-subjected surface.

In the case that a width-direction central portion of the substrate and/or the adhesive/curable layer is a main used portion, the protective members act as spacers, so that orange-peeling of the surface of the main used portion of the adhesive/curable layer, and formation of depressions in the main used portion of the substrate due to foreign matter are prevented; however, in this case, the roll pressure to which each of the both side portions in width-direction (the portions where a protective member is present) is subjected is locally increased, and hence the adhesive/curable material is more prone to oozing out than in the case that there are no protective members. However, for the laminated sheet according to the above invention (invention 2), the energy ray-curable material is cured at the both edges in width-direction of the adhesive/curable layer before the laminated sheet is rolled up, and hence the cured energy ray-curable material acts as a stopper, so that oozing out of the adhesive/curable material as described above is prevented.

Secondly, the present invention provides a method of producing a laminated sheet in which a target sheet of a predetermined shape comprising an adhesive/curable layer and a substrate is provided on a width-direction central portion of a release surface of a long release sheet, a protective portion having an adhesive/curable layer is provided on both side portions in width-direction of the release surface or a rear surface of the release sheet, the thickness at the protective portion is greater than the thickness at the target sheet, and at least a portion of the adhesive/curable layer of the protective portion positioned at both edges in width-direction of the release sheet is formed from an energy ray-curable material, the method of producing a laminated sheet being characterized by curing the energy ray-curable material at both edges in width-direction of the laminated sheet before rolling up the laminated sheet (invention 3).

Here, "target sheet" means a sheet used with a predetermined purpose utilizing adhesiveness and/or curability. Moreover, the "target sheet of a predetermined shape" may be a plurality of sheets provided independently of one another, or a long sheet.

For the laminated sheet according to the above invention (invention 3), because the protective portion is provided, marking of the target sheet due to roll pressure, orange-peeling of the surface of the adhesive/curable layer of the target sheet, and formation of depressions in the target sheet due to foreign matter, can be prevented; however, in this case, the roll pressure on the both side portions in width-direction of the laminated sheet (the portions where a protective portion is present) is locally increased, and hence the adhesive/curable material is more prone to oozing out than in the case that there are no protective portions. However, for the present laminated sheet, because the energy ray-curable material is cured at the both edges in width-direction of the adhesive/curable layer before the laminated sheet is rolled up, the cured energy ray-curable material acts as a stopper, so that oozing out of the adhesive/curable material as described above is prevented.

In the case of the above invention (invention 3), the adhesive/curable layer of the target sheet and the adhesive/curable layer of the protective portion are preferably laminated in one step (invention 4). Moreover, in the case of the above inventions (inventions 3 and 4), the protective portion is preferably constituted from a substrate and a protective member laminated on the substrate, the substrate of the protective portion and the substrate of the target sheet being laminated in one step (invention 5). According to these methods, the laminated sheet can be produced efficiently.

In the case of the above inventions (inventions 2 and 5), the protective member may be formed by laminating on a protective sheet and cutting the protective sheet to a predetermined shape (invention 6).

In the case of the above inventions (inventions 1 to 6), the producing method may have a step of cutting the substrate and the adhesive/curable layer to a predetermined shape, and peeling off and removing an unnecessary portion, so as to form a target sheet of a predetermined shape (invention 7). Through this step, a target sheet of a predetermined shape can be formed efficiently.

In the case of the above inventions (inventions 1 to 7), the energy ray-curable material is preferably cured by irradiating with energy rays in a thickness direction of the laminated sheet (invention 8). In the case of irradiating with the energy rays in this way, irradiation with the energy rays of portions of the adhesive/curable layer that should remain uncured can be prevented.

In the case of the above inventions (inventions 1 to 8), the energy ray-curable material preferably has a storage modulus after curing of not less than 10⁶ Pa (invention 9). If the storage modulus after curing of the energy ray-curable material is in this range, then the cured energy ray-curable material will not ooze out from the both edges in width-direction of the laminated sheet when the laminated sheet is rolled up.

Thirdly, the present invention provides a laminated sheet comprising a long release sheet, an adhesive/curable layer that is laminated on a release treatment-subjected surface of the release sheet and a width-direction central portion of the release sheet being a main used portion, a substrate that is laminated on the adhesive/curable layer, and a protective member provided on the substrate at both side portions in width-direction of the substrate or on a rear surface of the release sheet at both side portions in width-direction of the release sheet, the laminated sheet being characterized in that at least a portion of the adhesive/curable layer positioned at both edges in width-direction of the release sheet comprises a cured energy ray-curable material (invention 10).

Fourthly, the present invention provides a laminated sheet comprising a long release sheet, a target sheet of a predetermined shape comprising an adhesive/curable layer and a substrate, provided on a width-direction central portion of a release surface of the release sheet, and a protective portion having an adhesive/curable layer, provided on both side portions in width-direction of the release surface or a rear surface of the release sheet, the laminated sheet being characterized in that the thickness at the protective portion is greater than the thickness at the target sheet, and at least a portion of the adhesive/curable layer of the protective portion positioned at both edges in width-direction of the release sheet comprises a cured energy ray-curable material (invention 11).

In the case of the above invention (invention 11), the adhesive/curable layer of the target sheet and the adhesive/curable layer of the protective portion are preferably constituted from the same material (instruction 12). Moreover, in the case of the above inventions (inventions 11 and 12), the protective portion is preferably constituted from a substrate made of the same material as the substrate of the target sheet, and a protective member laminated on the substrate (invention 13).

In the case of the above inventions (inventions 10 to 13), the cured energy ray-curable material preferably has a storage modulus of not less than 10⁶ Pa (invention 14).

### ADVANTAGEOUS EFFECT OF THE INVENTION

According to a method of producing a laminated sheet of the present invention, there can be produced a laminated sheet according to which oozing out of an adhesive/curable material of an adhesive/curable layer from both edges in width-direction of the laminated sheet when the laminated sheet is rolled up can be prevented. Moreover, according to a laminated sheet of the present invention, oozing out of an adhesive/curable material of an adhesive/curable layer from both edges in width-direction of the laminated sheet when the laminated sheet is rolled up can be prevented.

### BRIEF DESCRIPTION OF THE DRAWINGS

FIG. 1 consists of sectional views showing a method of producing a laminated sheet according to a first embodiment of the present invention;
FIG. 2 is a plan view of a laminated sheet showing one step of the method of producing the laminated sheet according to the above embodiment;
FIG. 3 is a perspective view of a laminated sheet according to the first embodiment of the present invention;
FIG. 4 is a perspective view of a roll of the laminated sheet according to the above embodiment;
FIG. 5 consists of sectional views showing a method of producing a laminated sheet according to a second embodiment of the present invention;
FIG. 6 is a sectional view of a laminated sheet according to another embodiment of the present invention;
FIG. 7 consists of sectional views showing a method of producing a laminated sheet according to a third embodiment of the present invention;
FIG. 8 is a perspective view of a laminated sheet according to the third embodiment of the present invention;
FIG. 9 is a perspective view of a roll of the laminated sheet according to the above embodiment;
FIG. 10 consists of sectional views showing a method of producing a laminated sheet according to a fourth embodiment of the present invention; and
FIG. 11 is a sectional view of a laminated sheet according to another embodiment of the present invention.

### EXPLANATION OF REFERENCE NUMERALS

1A, 1B, 1C, 1D, 1E, 1F: laminated sheet
2A, 2B, 2C, 2D, 2E, 2F: release sheet
3A, 3B, 3C, 3D, 3E, 3F: adhesive/curable sheet
31A, 31B, 31C, 31D, 31E, 31F: adhesive/curable layer
32A, 32B, 32C, 32D, 32E, 32F: substrate
4A, 4D: protective sheet
41A, 41B, 41C, 41D, 41E, 41F: protective member
5: spot energy rays irradiating apparatuses

### BEST MODE FOR CARRYING OUT THE INVENTION

Following is a description of embodiments of the present invention, with reference to the drawings.

In first and second embodiments, description is given taking as an example a laminated sheet used for bonding a cover sheet to a recording layer in an optical disk producing process, or for transferring a convexoconcave pattern of a stamper; however, the present invention is not limited to this, but rather can be applied to any of various laminated sheets.

### [First embodiment]

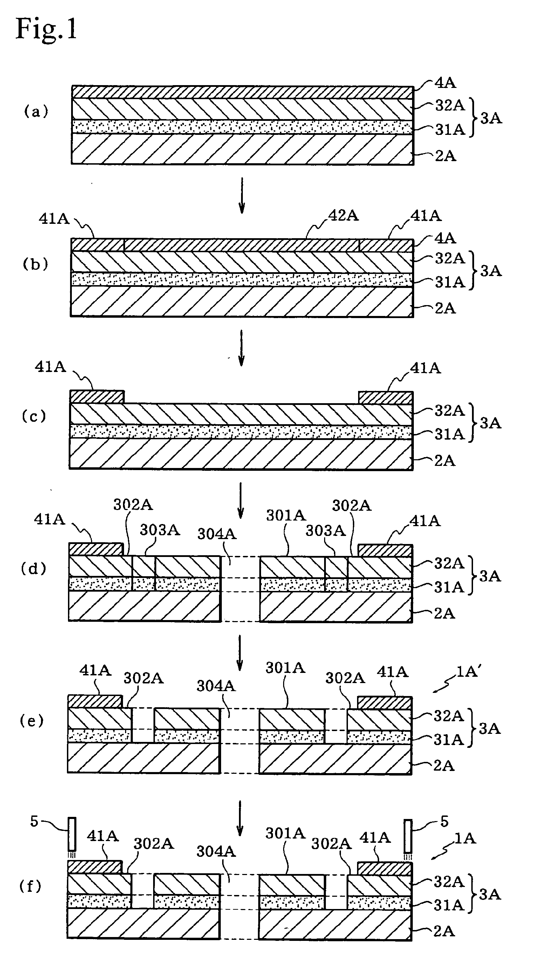

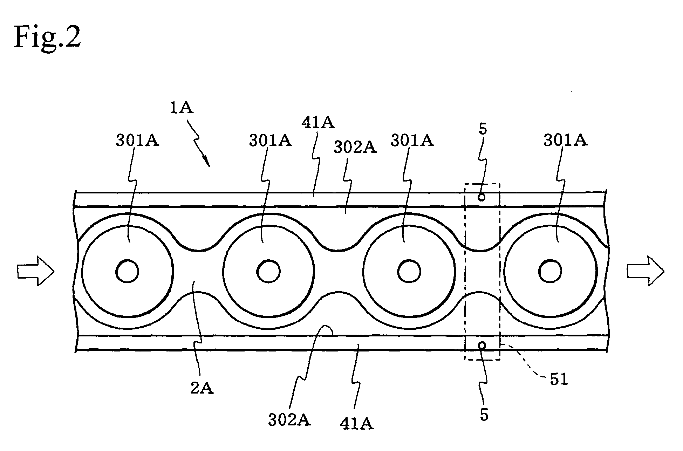

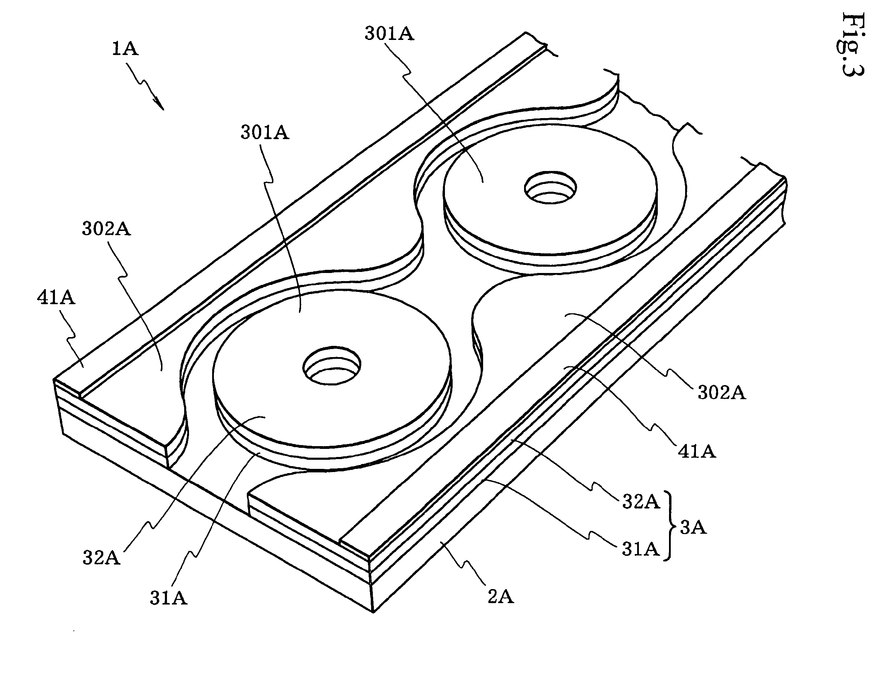

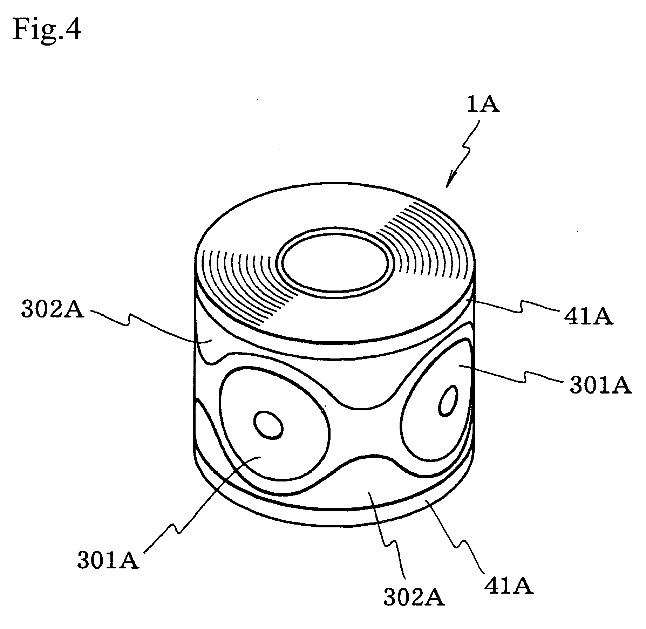

FIGS. 1(a) to (f) are sectional views showing a method of producing a laminated sheet according to the first embodiment of the present invention, FIG. 2 is a plan view of a laminated sheet showing one step of the method of producing the laminated sheet according to this embodiment, FIG. 3 is a perspective view of a laminated sheet according to the first embodiment of the present invention, and FIG. 4 is a perspective view of a roll of the laminated sheet according to this embodiment.

To produce the laminated sheet 1A according to the present embodiment, firstly, as shown in FIG. 1(a), an adhesive/curable layer 31A, a substrate 32A and a protective sheet 4A are laminated in this order onto a release treatment-subjected surface of a long release sheet 2A. Note that the adhesive/curable layer 31A and the substrate 32A together constitute an adhesive/curable sheet 3A.

As the release sheet 2A, a conventional publicly known one can be used, for example a resin film such as a polyethylene terephthalate film or a polypropylene film or paper such as glassine paper, clay-coated paper or laminated paper (mainly polyethylene-laminated paper) that has been subjected to release treatment with a silicone release agent or the like can be used. The thickness of the release sheet 2A is generally approximately from 10 to 200 µm, preferably approximately from 20 to 100 µm.

The adhesive/curable layer 31A is to act as an adhesive layer for bonding on a cover sheet or a stamper-receiving layer onto which a convexoconcave pattern of a stamper is transferred, and is made of an adhesive or a curable material. The adhesive or curable material is preferably made of an energy ray-curable material.

In view of the adhesiveness or convexoconcave pattern transferability, the energy ray-curable material preferably has a storage modulus before curing in a range of from 10³ Pa to less than 10⁶ Pa; however, if the storage modulus is in this range, then the energy ray-curable material will be prone to oozing out from both edges in width-direction of the laminated sheet through roll pressure when the laminated sheet is rolled up. This oozing out is marked in the case in particular that the energy ray-curable material contains a polyfunctional monomer/oligomer, described below.

On the other hand, the energy ray-curable material preferably has a storage modulus after curing of not less than 10⁶ Pa, preferably not less than 10⁷ Pa. If the storage modulus after curing of the energy ray-curable material is in this range, then the cured energy ray-curable material will not ooze out from the both edges in width-direction of the laminated sheet when the laminated sheet is rolled up. Note that the measurement temperature of the storage modulus before and after curing is made to be the temperature when the laminated sheet is rolled up, i.e. room temperature.

Examples of the energy ray-curable material include one having an energy ray-curable polymer as a principal component thereof, one having a mixture of a polymer that is not energy ray-curable and an energy ray-curable polyfunctional monomer and/or oligomer as a principal component thereof, and one having a mixture of an energy ray-curable polymer and an energy ray-curable polyfunctional monomer and/or oligomer as a principal component thereof.

As an energy ray-curable polymer, for example, an acrylic ester copolymer having energy ray-curable groups on side chains thereof can be used. As such an acrylic ester copolymer, for example, there can be used an energy ray-curable acrylic ester copolymer having energy ray-curable groups on side chains thereof and having a weight average molecular weight (Mw) of not less than 100,000, obtained by reacting together an acrylic copolymer having functional group-containing monomer units and an unsaturated group-containing compound having a substituent that will bond to this functional group.

As a polymer that is not energy ray-curable, for example, an acrylic ester copolymer can be used.

Examples of energy ray-curable polyfunctional monomers/oligomers include trimethylolpropane tri(meth)acrylate, pentaerythritol tri(meth)acrylate, and polyurethane oligo(meth)acrylates.

The adhesive/curable layer 31A is preferably formed uniformly using the energy ray-curable material, but it is sufficient so long as the energy ray-curable material constitutes at least both side portions in width-direction of the adhesive/curable layer 31A, with it being acceptable for the remainder portion (a width-direction central portion of the adhesive/curable layer 31A) to be constituted, for example, from a pressure-sensitive adhesive of an acrylic type, a polyester type, a urethane type, a rubber type, a silicone type, or the like.

To form the adhesive/curable layer 31A, for example, a coating agent containing the adhesive/curable material for constituting the adhesive/curable layer 31A, and, if desired, also a solvent is prepared, and is then applied onto the release treatment-subjected surface of the release sheet 2A using a coater such as a kiss roll coater, a reverse roll coater, a knife coater, a roll knife coater or a die coater, and dried. The substrate 32A is then laminated onto the adhesive/curable layer 31A formed in this way, thus obtaining the adhesive/curable sheet 3A comprising the adhesive/curable layer 31A and the substrate 32A. The thickness of the adhesive/curable layer 31A is generally approximately from 5 to 100 µm, preferably approximately from 10 to 30 µm.

An example of the substrate 32A in the present embodiment is one for constituting a light-receiving surface of an optical disk, being a cover sheet for a recording layer of the optical disk. As the material of such a substrate 32A, one having sufficient optical transparency in a wavelength region of light for reading data is preferable; so that the optical disk can be manufactured easily, one having a suitable rigidity/flexibility is preferable, and for storing the optical disk, one that is temperature-stable is preferable. As such a material, for example, a resin such as a polycarbonate, polymethyl methacrylate, or polystyrene can be used.

The linear expansion coefficient of the above material is preferably approximately the same as the linear expansion coefficient of an optical disk substrate so that the optical disk will not warp at high temperature. For example, in the case that the optical disk substrate is made of a polycarbonate resin, the substrate 32A is preferably made of the same polycarbonate resin.

The thickness of the substrate 32A in the above case is set in accordance with the type of the optical disk and the thickness of other constituent parts of the optical disk, but is generally approximately from 25 to 300 µm, preferably approximately from 50 to 200 µm.

Alternatively, as the substrate 32A in the present embodiment, a release sheet like the release sheet 2A described above can be used. In this case, the release treatment-subj ected surface of the substrate 32A is stuck onto the surface of the adhesive/curable layer 31A, the adhesive/curable layer 31A having been laminated onto the release sheet 2A. Here, it is preferable to make one of the release sheet 2A and the substrate 32A be a light release type release sheet, and the other a heavy release type release sheet.

According to the laminated sheet in the above case, for example, it is possible to peel the release sheet 2A off from the adhesive/curable layer 31A, stick the exposed adhesive/curable layer 31A onto a recording layer of an optical disk, and then peel the substrate 32A off from the adhesive/curable layer 31A, and stick another substrate (e.g. a cover sheet) onto the adhesive/curable layer 31A, or else peel the release sheet 2A off from the adhesive/curable layer 31A, stick the exposed adhesive/curable layer 31A onto an optical disk substrate, and then peel the substrate 32A off from the adhesive/curable layer 31A, transfer and fix a convexoconcave pattern of a stamper onto the adhesive/curable layer 31A, and laminate a reflective layer onto the convexoconcave surface obtained.

There are no particular limitations on the material constituting the protective sheet 4A, but a substrate comprising a resin film, paper, metal foil or the like having an adhesive layer laminated thereon can be preferably used.

As the substrate of the protective sheet 4A, it is preferable to use, for example, a resin film made of a resin such as polyethylene, polypropylene, polybutene, polybutadiene, polyvinyl chloride, an ionomer, an ethylene-methacrylic acid copolymer, polyethylene terephthalate, polyethylene naphthalate, polybutylene terephthalate, a polyimide, a polyetherimide, a polyaramid, a polyetherketone, a polyetheretherketone, polyphenylene sulfide, poly(4-methylpentene-1) or polytetrafluoroethylene, or a crosslinked such resin, or a laminate of such resin films.

An adhesive constituting the adhesive layer of the protective sheet 4A is preferably a pressure-sensitive adhesive. In this case, the protective sheet 4A may be pressed onto the substrate 32A of the adhesive/curable sheet 3A. The type of the pressure-sensitive adhesive may be any of an acrylic type, a polyester type, a urethane type, a rubber type, a silicone type, an ethylene-vinyl acetate type, or the like. Moreover, the pressure-sensitive adhesive may be crosslinked.

In the case that the adhesive constituting the adhesive layer of the protective sheet 4A is a pressure-sensitive adhesive, the pressure-sensitive adhesive does not contain a low-molecular-weight monomer or oligomer, and hence oozing out of the adhesive substantially does not occur.

The thickness of the protective sheet 4A is preferably from 5 to 100 µm, particularly preferably from 25 to 50 µm. If the thickness of the protective sheet 4A is less than 5 µm, then the desired effects of the protective sheet 4A cannot be obtained sufficiently, whereas if the thickness of the protective sheet 4A exceeds 100 µm, then the diameter (volume) of the roll obtained when the laminated sheet 1A is rolled up will be too great.

After the release sheet 2A, the adhesive/curable sheet 3A and the protective sheet 4A have been laminated together as shown in FIG. 1(a), the protective sheet 4A only is cut such as not to reach the adhesive/curable sheet 3A, thus dividing the protective sheet 4A into protective member 41A portions at both side portions in width-direction and a remainder portion 42A at a width-direction central portion as shown in FIG. 1 (b) . The cutting of the protective sheet 4A may be carried out using an ordinary method, for example can be carried out using a punching apparatus or the like. In the present embodiment, the width of each of the protective members 41A is made to be slightly narrower than the minimum width of a bolstering portion 302A formed in a subsequent step.

The remainder portion 42A of the protective sheet 4A formed through the above cutting is peeled off and thus removed as shown in FIG. 1(c), thus forming band-shaped protective members 41A.

Next, as shown in FIG. 1(d), the adhesive/curable sheet 3A is cut, thus dividing the adhesive/curable sheet 3A into disk portions 301A, bolstering portions 302A and a remainder portion 303A, and moreover punching out a central portion of each of the disk portions 301A so as to from a center hole portion 304A. Then, as shown in FIG. 1(e), the remainder portion 303A of the adhesive/curable sheet 3A is peeled off and thus removed (the laminated sheet in this state is referred to as the laminated sheet 1A'). The cutting and punching of the adhesive/curable sheet 3A may be carried out using an ordinary method, for example can be carried out using a punching apparatus or the like.

As shown in FIGS. 2 and 3, each of the disk portions 301A (each target sheet) has a shape in plan view the same as that of an optical disk, a plurality of the disk portions 301A being provided continuously along the width-direction central portion of the release treatment-subjected surface of the release sheet 2A. As shown in FIGS. 2 and 3, the shape in plan view of each of the bolstering portions 302A is wavy overall, dipping in toward the protective member 41A, which is positioned at an outer edge of the bolstering portion 302A, so as to run along an outer periphery of each disk portion 301A, and protruding out between disk portions 301A so as to enter in between the disk portions 301A.

Finally, as shown in FIG. 1(f) and FIG. 2, the both edges in width-direction of the laminated sheet 1A' is irradiated with energy rays, thus curing the energy ray-curable material at the edges of the adhesive/curable layer 31A, so as to obtain the laminated sheet 1A as shown in FIG. 3. The laminated sheet 1A is rolled up as shown in FIG. 4 so as to form a roll.

As the energy rays, ultraviolet rays, electron rays, or the like are generally used. The energy ray irradiation amount varies according to the type of the energy rays, but, for example, in the case of ultraviolet rays, approximately 100 to 500mJ/cm² in terms of the amount of radiation is preferable, and in the case of electron rays, approximately 10 to 1000 krad is preferable.

As shown in FIG. 2, the irradiation with the energy rays can be carried out by setting apparatuses capable of spot irradiation of the energy rays 5 (e.g. spot UV irradiating apparatuses) in a jig 51 and moving the laminated sheet 1A' in a longitudinal direction; by using this method, the both edges in width-direction of the laminated sheet 1A' can be irradiated with the energy rays continuously.

Moreover, the energy rays are preferably irradiated in the thickness direction of the laminated sheet 1A'. If the energy rays were irradiated from the edges of the laminated sheet 1A' toward the center of the laminated sheet 1A', then there would be a risk of the energy rays reaching the adhesive/curable layer 31A at the disk portions 301A so that the adhesive/curable layer 31A was cured at the disk portions 301A, but by carrying out the irradiation with the energy rays as described above, this problem can be avoided. Note that in the present embodiment, there are gaps between the bolstering portions 302A and the disk portions 301A, and hence compared with the case that there are no such gaps, the adhesive/curable layer 31A is less prone to being irradiated with the energy rays at the disk portions 301A.

The width of the adhesive/curable layer 31A cured by irradiating with the energy rays varies depending on the width of each of the protective members 41A or bolstering portions 302A, but is generally preferably approximately from 0.1 to 10 mm, particularly preferably from 0.5 to 3 mm.

In the laminated sheet 1A produced as described above, protective members 41A are provided at the both side portions in width-direction thereof so that the portions where the protective members 41A are present form protective portions; the thickness at these protective portions is greater than the thickness at the disk portions 301A by the thickness of the protective members 41A. When the laminated sheet 1A is rolled up as shown in FIG. 4, the both side portions in width-direction of the laminated sheet 1A where the protective portions are present are locally subjected to roll pressure, but because the adhesive/curable layer 31A has been cured at the both edges in width-direction of the laminated sheet 1A, these portions act as stoppers, whereby the adhesive/curable material constituting the adhesive/curable layer 31A is prevented from oozing out from the both edges in width-direction of the laminated sheet 1A.

Accordingly, for the laminated sheet 1A, problems such as contamination of the disk portions 301A or soiling of a rolling shaft caused by oozing out of the adhesive/curable material do not occur.

In the roll of the laminated sheet 1A described above, the protective members 41A act as spacers, so that a small gap arises between the surface of each of the disk portions 301A and the rear surface of the release sheet 2A rolled up thereupon. There is thus no strong pressing against each of the disk portions 301A by an outline portion of another disk portion 301A, a bolstering portion 302A or a protective member 41A, and hence the disk portions 301A can be prevented from being marked due to the roll pressure. Moreover, orange-peeling of the surface of the adhesive/curable layer 31A at each of the disk portions 301A is also suppressed, and hence the surface smoothness of the adhesive/curable layer 31A can be maintained at each of the disk portions 301A.

Moreover, even in the case that pieces of foreign matter such as minute pieces of rubbish are trapped in between sections of the laminated sheet 1A rolled up on one another when the laminated sheet 1A is rolled up, because a gap is present between the surface of each of the disk portions 301A and the rear surface of the release sheet 2A, if the diameter of the pieces of foreign matter is smaller than the size of this gap, then formation of depressions in the disk portions 301A due to the foreign matter can be prevented. Moreover, with a conventional roll, even in the case that just a single piece of foreign matter gets trapped in, depressions are formed due to the effect of this foreign matter in a plurality of the disk portions 301A which are rolled up on top of one another, whereas for the roll of the laminated sheet 1A according to the present embodiment, the release sheet 2A and each of the disk portions 301A can be displaced from one another by the size of the gap therebetween in the radial direction of the roll, and hence even if a piece of foreign matter having a diameter greater than the size of the gap becomes attached to a disk portion 301A, the effect of the piece of foreign matter on other disk portions 301A can be suppressed, and hence formation of depressions in a plurality of the disk portions 301A due to the foreign matter can be prevented.

### [Second embodiment]

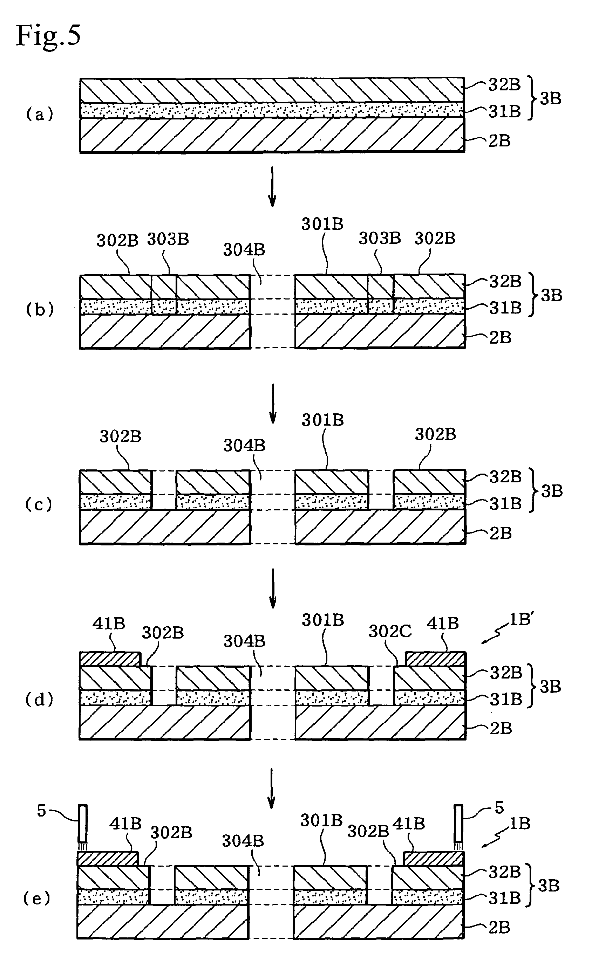

FIGS. 5(a) to (e) are sectional views showing a method of producing a laminated sheet according to the second embodiment of the present invention.

To produce the laminated sheet 1B according to the present embodiment, firstly, as shown in FIG. 5(a), an adhesive/curable layer 31B and a substrate 32B are laminated in this order onto a release treatment-subj ected surface of a long release sheet 2B. Note that the adhesive/curable layer 31B and the substrate 32B together constitute an adhesive/curable sheet 3B.

As the materials of the release sheet 2B, the adhesive/curable layer 31B and the substrate 32B, ones as for the release sheet 2A, the adhesive/curable layer 31A and the substrate 32A of the laminated sheet 1A according to the first embodiment described above can be used.

After the release sheet 2B and the adhesive/curable sheet 3B have been laminated together as shown in FIG. 5(a), the adhesive/curable sheet 3B is cut, thus dividing the adhesive/curable sheet 3B into disk portions 301B, bolstering portions 302B and a remainder portion 303B, and moreover punching out a central portion of each of the disk portions 301B so as to from a center hole portion 304B as shown in FIG. 5 (b) . Then, as shown in FIG. 5(c), the remainder portion 303B of the adhesive/curable sheet 3B is peeled off and thus removed.

The shape in plan view of each of the disk portions 301B (each target sheet) and each of the bolstering portions 302B is the same as for the disk portions 301A and the bolstering portions 302A in the laminated sheet 1A according to the first embodiment described above (see FIGS. 2 and 3).

Next, as shown in FIG. 5(d), a band-shaped protective member 41B is laminated onto an outside edge portion of each of the bolstering portions 302B (the laminated sheet in this state is referred to as the laminated sheet 1B'). Each of the protective members 41B may be constituted from a sheet like the protective sheet 4A of the laminated sheet 1A according to the first embodiment described above, or may be formed by printing on ink or applying on paint.

There are no particular limitations on the type of the ink/paint or the method of printing/applying on the ink/paint; for example, an ink/paint containing a vehicle such as a urethane resin or an acrylic resin can be printed on using a method such as planography or relief printing, or applied on using a method such as spraying or brush application.

In the case of forming the protective members 41B from ink or paint as described above, it is preferable for the dried layer thickness to be, as for the case of a sheet, from 5 to 100 µm, particularly preferably from 25 to 50 µm.

In the present embodiment, the step of laminating on the protective members 41B is carried out at the stage described above, but there is no limitation to this, it being possible to carry out this lamination step at any desired stage in the laminated sheet 1B producing process.

Finally, as shown in FIG. 5(e), both edges in width-direction of the laminated sheet 1B' is irradiated with energy rays, thus curing the energy ray-curable material at the edges of the adhesive/curable layer 31B, and then the laminated sheet 1B obtained (see FIG. 3) is rolled up into a roll (see FIG. 4). The irradiation with the energy rays can be carried out as in the first embodiment described above.

When the laminated sheet 1B has been rolled up, as well as the laminated sheet 1A according to the first embodiment described above, there is no risk of the oozing out of the adhesive/curable material constituting the adhesive/curable layer 31B from the both edges in width-direction of the laminated sheet 1B, and moreover marking of the disk portions 301B due to the roll pressure, orange-peeling of the surface of the adhesive/curable layer 31B at each of the disk portions 301B, and formation of depressions in the disk portions 301B due to foreign matter, can be prevented.

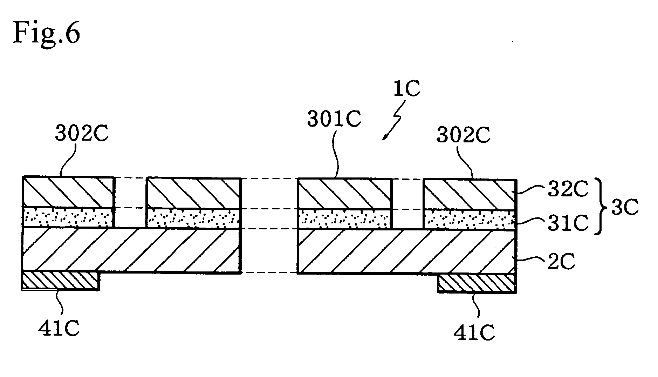

Note that in the first and second embodiments described above, the protective members 41A or 41B are provided on the bolstering portions 302A or 302B (on the substrate 32A or 32B); however, the present invention is not limited to this, but rather as in a laminated sheet 1C shown in FIG. 6, protective members 41C may instead be provided on both side portions in width-direction of a rear surface of a release sheet 2C. In this case, effects as described above can again be obtained. Moreover, in the first and second embodiments described above, the protective members 41A or 41B are band-shaped; however, the protective members may instead have the same shape as the bolstering portions 302A or 302B.

In third and fourth embodiments below, description is given for the case of a laminated sheet that is used after a main used portion of the substrate and adhesive/curable layer (the adhesive/curable sheet) has been cut to a desired shape.

### [Third embodiment]

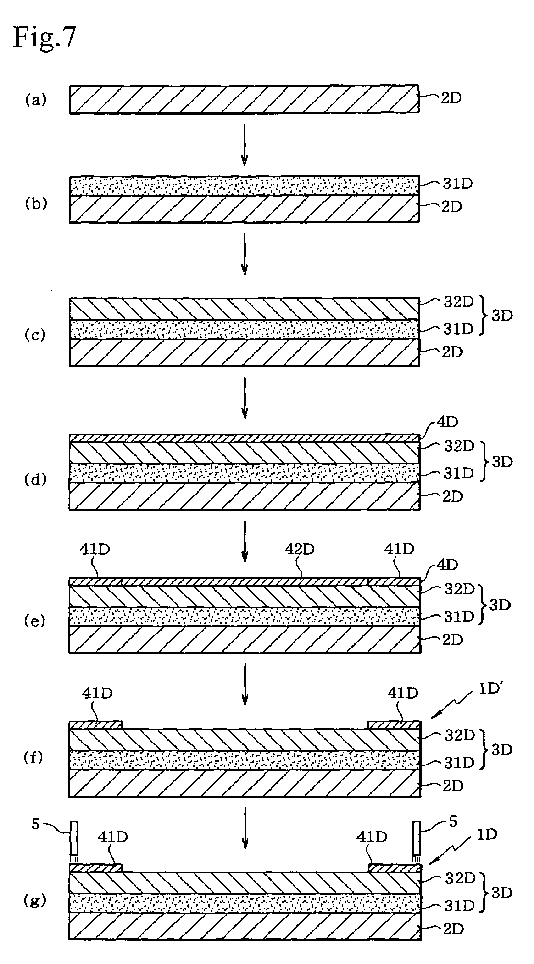

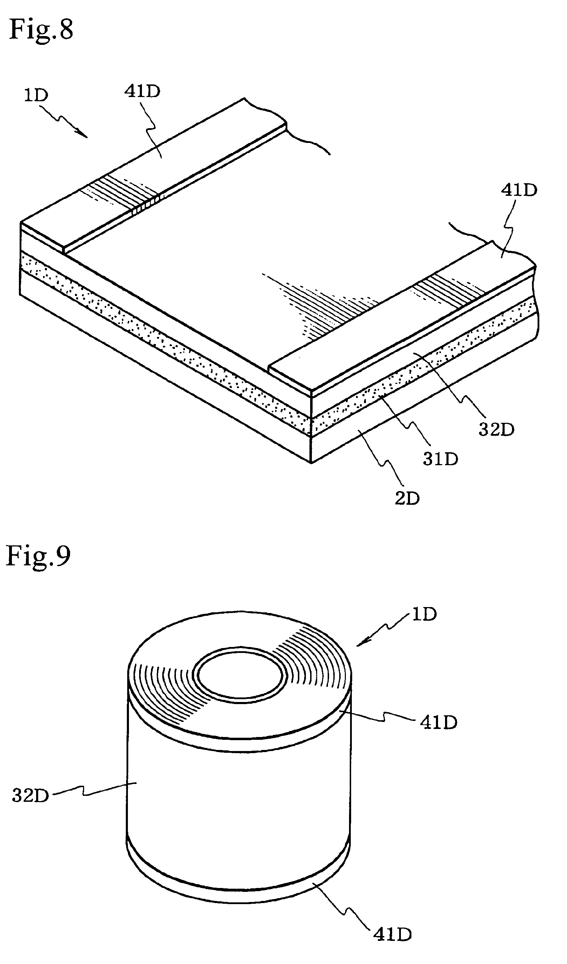

FIGS. 7 (a) to (g) are sectional views showing a method of producing a laminated sheet according to the third embodiment of the present invention, FIG. 8 is a perspective view of a laminated sheet according to the third embodiment of the present invention, and FIG. 9 is a perspective view of a roll of the laminated sheet according to this embodiment.

To produce the laminated sheet 1D according to the present embodiment, as shown in FIGS. 7(a) to (d), an adhesive/curable layer 31D, a substrate 32D and a protective sheet 4D are laminated in this order onto a release treatment-subjected surface of a long release sheet 2D. Note that the adhesive/curable layer 31D and the substrate 32D together constitute an adhesive/curable sheet 3D.

As the materials of the release sheet 2D, the adhesive/curable layer 31D and the protective sheet 4D, ones as for the release sheet 2A, the adhesive/curable layer 31A and the protective sheet 4A of the laminated sheet 1A according to the first embodiment described above can be used. Note that in the present embodiment, a width-direction central portion of the adhesive/curable layer 31D is a main used portion (a portion where the surface of the adhesive/curable layer must be smooth).

On the other hand, the substrate 32D may be one to be bonded to a predetermined bonded obj ect by the adhesive/curable layer 31D, or may be a release sheet to be peeled off from the adhesive/curable layer 31D. In the case of the former, the substrate 32D is used together with the adhesive/curable layer 31D as an adhesive/curable sheet 3D, the width-direction central portion thereof being the main used portion.

In the case that the substrate 32D is used as an adhesive/curable sheet 3D, as the material of the substrate 32D, any of various types of material can be selected in accordance with the usage of the substrate 32D. For example, in the case that the substrate 32D is to be used as a cover sheet for a recording layer of an optical disk, a resin such as a polycarbonate, polymethyl methacrylate or polystyrene can be selected as the material of the substrate 32D. Moreover, for example, in the case that the substrate 32D is to be used as a film for a display such as a PDA, a resin such as a cellulose ester such as cellulose diacetate, cellulose triacetate or cellulose acetate butyrate, a polyester such as polyethylene terephthalate or polybutylene terephthalate, a polyolefin such as polyethylene or polypropylene, a polyamide, a polyimide, polyvinyl chloride, polymethyl methacrylate, a polycarbonate, or a polyurethane can be selected as the material of the substrate 32D; a substrate made of such a resin can be used after the surface thereof has been subjected to anti-reflection treatment, anti-glare treatment, or the like.

In the case that the substrate 32D is used as an adhesive/curable sheet 3D, the thickness of the substrate 32D is set in accordance with the usage of the substrate 32D, but is generally approximately from 25 to 300 µm, preferably approximately from 50 to 200 µm.

On the other hand, in the case that the substrate 32D is used as a release sheet, as the material of the substrate 32D, a material like that for the release sheet 2D described above can be selected.

Next, as shown in FIG. 7(e), the protective sheet 4D only is cut such as not to reach the substrate 32D, thus dividing the protective sheet 4D into protective member 41D portions at both side portions in width-direction and a remainder portion 42D at a width-direction central portion. The remainder portion 42D of the protective sheet 4D is then peeled off and thus removed as shown in FIG. 7(f) (the laminated sheet in this state is referred to as the laminated sheet 1D'). Note that the width of each of the protective members 41D is set such that the protective member 41D does not lie on the main used portion of the adhesive/curable layer 31D.

Finally, as shown in FIG. 7(g), both edges in width-direction of the laminated sheet 1D' is irradiated with energy rays, thus curing the energy ray-curable material at the both edges in width-direction of the adhesive/curable layer 31D, so as to obtain the laminated sheet 1D as shown in FIG. 8. The irradiation with the energy rays can be carried out as in the first embodiment described above. The laminated sheet 1D obtained is rolled up as shown in FIG. 9 so as to form a roll.

When the laminated sheet 1D has been rolled up, as well as the laminated sheet 1A according to the first embodiment described above, there is no risk of the oozing out of the adhesive/curable material constituting the adhesive/curable layer 31D from the both edges in width-direction of the laminated sheet 1D, and moreover orange-peeling of the surface of the main used portion of the adhesive/curable layer 31D, and formation of depressions in the main used portion of the substrate 32D due to foreign matter, can be prevented.

To use the laminated sheet 1D that has been made into a roll as described above, the laminated sheet 1D is rolled out from the roll, and the main used portion of the adhesive/curable sheet 3D is cut to a desired shape, and peeled off from the release sheet 2D. The cutting can be carried out using an ordinary method, for example can be carried out using a punching apparatus or the like.

The smoothness of the surface of the cut substrate 32D and adhesive/curable layer 31D is maintained, and hence in the case, for example, of using the adhesive/curable sheet 3D (or adhesive/curable layer 31D) with (for bonding) a cover sheet for protecting a recording layer of an optical disk, errors in reading/writing data due to the adhesive/curable sheet 3D (or adhesive/curable layer 31D) can be prevented from arising; moreover, in the case of using the adhesive/curable sheet 3D (or adhesive/curable layer 31D) with (for bonding) an anti-reflection film for a display, there is no risk of the adhesive/curable sheet 3D (or adhesive/curable layer 31D) impairing the transparency of the display or the image sharpness.

### [Fourth embodiment]

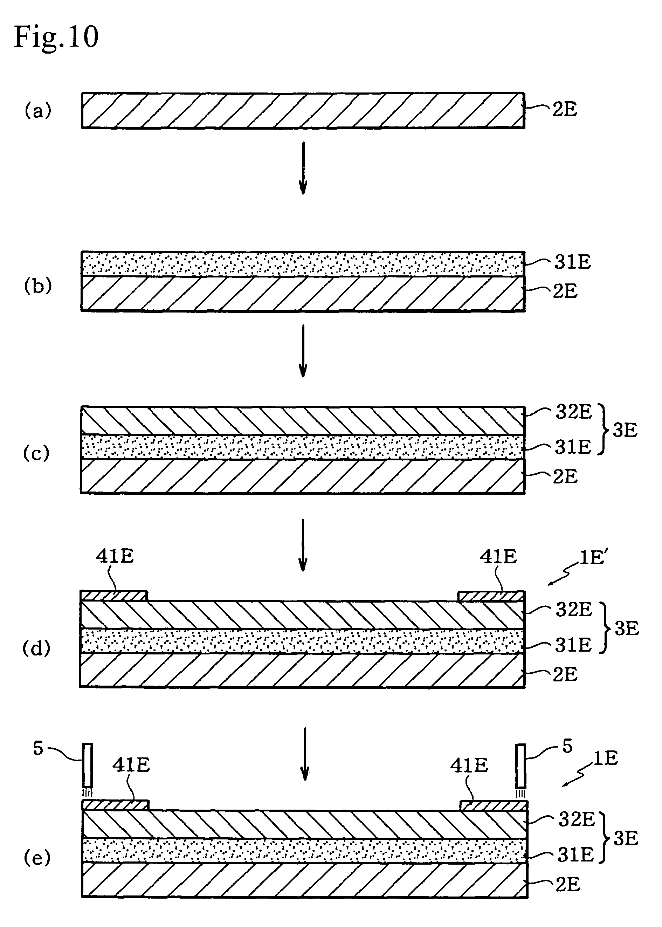

FIGS. 10 (a) to (e) are sectional views showing a method of producing a laminated sheet according to the fourth embodiment of the present invention.

To produce the laminated sheet 1E according to the present embodiment, firstly, as shown in FIGS. 10(a) to (c), an adhesive/curable layer 31E and a substrate 32E are laminated in this order onto a release treatment-subjected surface of a long release sheet 2E. Note that the adhesive/curable layer 31E and the substrate 32E together constitute an adhesive/curable sheet 3E.

As the materials of the release sheet 2E, the adhesive/curable layer 31E and the substrate 32E, ones as for the release sheet 2D, the adhesive/curable layer 31D and the substrate 32D of the laminated sheet 1D according to the third embodiment described above can be used.

Next, as shown in FIG. 10(d), a protective member 41E is laminated onto both side portions in width-direction of the substrate 32E (the laminated sheet in this state is referred to as the laminated sheet 1E'). The protective members 41E can be formed as well as the protective members 41B of the laminated sheet 1B according to the second embodiment described above.

In the present embodiment, the step of laminating on the protective members 41E is carried out at the stage described above, but there is no limitation to this, it being possible to carry out this lamination step at any desired stage in the laminated sheet 1E producing process.

Finally, as shown in FIG. 10(e), the both edges in width-direction of the laminated sheet 1E' is irradiated with energy rays, thus curing the energy ray-curable material at the edges of the adhesive/curable layer 31E, and then the laminated sheet 1E obtained (see FIG. 8) is rolled up into a roll (see FIG. 9). The irradiation with the energy rays can be carried out as in the first embodiment described above.

When the laminated sheet 1E has been rolled up, as well as the laminated sheet 1D according to the third embodiment described above, there is no risk of the oozing out of the adhesive/curable material constituting the adhesive/curable layer 31E from the both edges in width-direction of the laminated sheet 1E, and moreover orange-peeling of the surface of the main used portion of the adhesive/curable layer 31E, and formation of depressions in the main used portion of the substrate 32E due to foreign matter, can be prevented.

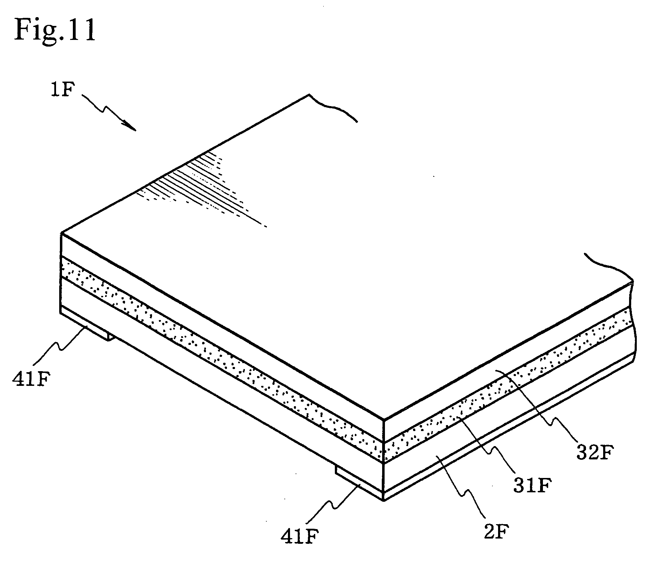

Note that in the third and fourth embodiments described above, the protective members 41D or 41E are provided on the both side portions in width-direction of the substrate 32D or 32E; however, the present invention is not limited to this, but rather as in a laminated sheet 1F shown in FIG. 11, protective members 41F may instead be provided on both side portions in width-direction of a rear surface of a release sheet 2F. In this case, effects as described above can again be obtained.

### [Other embodiments]

The above embodiments have been described to aid understanding of the present invention, not to limit the present invention. The various elements disclosed in the above embodiments are thus deemed to also include all design variations and equivalents falling under the technical scope of the present invention.

For example, in each of the laminated sheets 1A, 1B, 1C, 1D, 1E and 1F, the protective members 41A, 41B, 41C, 41D, 41E or 41F may be omitted; even in this case, oozing out of the adhesive/curable material constituting the adhesive/curable layer 31A, 31B, 31C, 31D, 31E or 31F from the both edges in width-direction of the laminated sheet 1A, 1B, 1C, 1D, 1E or 1F due to the roll pressure can be prevented.

### EXAMPLES

Following is a more detailed description of the present invention through examples and so on; however, the scope of the present invention is not limited by these examples and so on.

### [Example 1]

62 parts by weight of butyl acrylate, 10 parts by weight of methyl methacrylate, and 28 parts by weight of 2-hydroxyethyl acrylate were subjected to reaction in ethyl acetate, thus obtaining an ethyl acetate solution (solid concentration: 40 wt%) of an acrylic copolymer having hydroxyl groups as functional groups. 100 parts by weight of ethyl acetate, 30 parts by weight (80.5 equivalents per 100 equivalents of the 2-hydroxyethyl acrylate in the acrylic copolymer) of methacryloyloxyethyl isocyanate as an unsaturated group-containing compound having an isocyanate group as a substituent, and 0.12 parts by weight of dibutyltin laurate as a catalyst were further added to 250 parts by weight of the ethyl acetate solution of the acrylic copolymer, and reaction was carried out for 24 hours at room temperature under a nitrogen atmosphere, thus obtaining an energy ray-curable acrylic ester copolymer (energy ray-curable material). This energy ray-curable acrylic ester copolymer had a weight average molecular weight (Mw) of 600,000.

100 parts by weight in terms of solids of a composition comprising an energy ray-curable polyfunctional monomer/oligomer (made by DAINICHISEIKA COLOR & CHEMICALS MFG. CO., LTD., Seika-Beam 14-29B (NPI)) was added per 100 parts by weight in terms of solids of the energy ray-curable acrylic ester copolymer solution obtained, 10.0 parts by weight of 2,2-dimethoxy-1,2-diphenylethan-1-one as a photopolymerization initiator, and 3.3 parts by weight of an isocyanate type crosslinking agent (made by NIPPON POLYURETHANE INDUSTRY, CO. LTD. , Coronate L) as a crosslinking agent were further added, and the solid concentration was adjusted to 40 wt%, thus obtaining an energy ray-curable material coating agent.

The above energy ray-curable material coating agent was applied using a knife coater such that the dried film thickness would be 25 µm onto the release treatment-subjected surface of a heavy release type release sheet (made by LINTEC Corporation, SP-PET50C, thickness: 50 µm) obtained by subj ecting one surface of a polyethylene terephthalate film as a long substrate to release treatment with a heavy release type silicone resin, and drying was carried out for 1 minute at 90 °C, thus forming an adhesive/curable layer made of the energy ray-curable material.

Next, the release treatment-subjected surface of a light release type release sheet (made by LINTEC Corporation, SP-PET38GS, thickness: 38 µm) obtained by subjecting one surface of a polyethylene terephthalate film to release treatment with a light release type silicone resin was placed onto the surface of the adhesive/curable layer, and a protective sheet (made by SUN A KAKEN CO., LTD., PAC2-70, thickness: 70 µm) in which an ethylene-vinyl acetate type pressure-sensitive adhesive layer was provided on a polyethylene substrate was further stuck onto the opposite side of the heavy release type release sheet to the release treatment-subjected surface, thus producing a long laminate having a width of 150 mm and a length of 100 m.

Next, using a punching apparatus (made by MARK ANDY, INC., Mark Andy 910), the protective sheet was divided into protective member portions (width: 10 mm) at width-direction side portions and a remainder portion at a width-direction central portion as shown in FIG. 1(b), and then the remainder portion was peeled off and thus removed as shown in FIG. 1 (c) .

Then, using the above punching apparatus, as shown in FIG. 1(d), the substrate and adhesive/curable layer were (the adhesive sheet was) divided into disk-shaped disk portions (500 of them, each of diameter 120 mm) as target sheets, wavy bolstering portions, and a remainder portion, and moreover a central portion of each of the disk portions was punched out so as to form a center hole portion, and then the remainder portion was peeled off and thus removed as shown in FIG. 1 (e) .

The laminated sheet obtained was moved in the longitudinal direction at a speed of 18 m/min, during a portion of width 1 mm from the edge at each of the both edges in width-direction of the laminated sheet was irradiated with ultraviolet rays using a spot UV irradiating apparatus (made by HOYA-SCHOTT CORPORATION, Execure 3000), thus curing the adhesive/curable layer at each of these portions. The ultraviolet rays were irradiated in the thickness direction of the laminated sheet (from a front surface side to a rear surface side), the irradiation amount being 400 mJ/cm².

Note that the energy ray-curable material had a storage modulus (25 °C) before curing of 7.42 × 10⁴ Pa, and a storage modulus (25 °C) after curing of 1.62 × 10⁹ Pa. Moreover, in the laminated sheet, the thickness of each of the protective portions where the protective sheet was present was 145 µm, and the thickness of each of the target sheets was 75 µm.

The laminated sheet produced as described above (see FIGS. 2 and 3) was rolled onto a 6 inch-diameter ABS core with an initial rolling tension of 12 N and a taper ratio of 50%, thus obtaining a roll (see FIG. 4).

### [Example 2]

An acrylic adhesive (made by LINTEC Corporation, M0003) was applied to a thickness of 20 µm onto a polyethylene terephthalate film (width: 7.5 mm, thickness: 25 µm) as a substrate so as to form an adhesive layer, thus obtaining an adhesive tape for forming protective members.

The energy ray-curable material coating agent prepared in Example 1 was applied using a knife coater such that the thickness after drying would be 25 µm onto the release treatment-subjected surface of a release sheet (made by LINTEC Corporation, SP-PET50C, thickness: 50 µm) obtained by applying a silicone type release agent onto one surface of a polyethylene terephthalate film, and drying was carried out for 3 minutes at 100 °C. A substrate comprising a polycarbonate film (made by TEIJIN LTD. , Pure-Ace C110-75, thickness: 75 µm) was pressed onto the adhesive/curable layer thus formed, thus producing a long laminate having a width of 150 mm and a length of 100 m.

Next, using a punching apparatus (made by Mark Andy, Inc., Mark Andy 910), as shown in FIG. 5(b), the substrate and adhesive/curable layer were (the adhesive sheet was) divided into disk-shaped disk portions (500 of them, each of diameter 120 mm), wavy bolstering portions, and a remainder portion, and moreover a central portion of each of the disk portions was punched out so as to form a center hole portion, and then the remainder portion was peeled off and thus removed as shown in FIG. 5(c).

Then, as shown in FIG. 5(d), the above adhesive tape was stuck as a protective member onto an outside edge portion of each of the bolstering portions, and then the both edges in width-direction of the laminated sheet obtained was irradiated with ultraviolet rays as in Example 1. Here, in the laminated sheet, the thickness of each of the protective portions where a protective member was present was 145 µm, and the thickness of each of the target sheets was 100 µm.

The laminated sheet produced as described above (see FIGS. 2 and 3) was rolled onto a core using the same rolling conditions as in Example 1, thus obtaining a roll (see FIG. 4).

### [Example 3]

A protective sheet (made by SUNA KAKEN CO. , LTD., PAC2-70, thickness: 70 µm) in which an ethylene-vinyl acetate type pressure-sensitive adhesive layer was provided on a polyethylene substrate was stuck onto one surface of a polycarbonate film (made by TEIJIN LTD., Pure-Ace C110-75, thickness: 75 µm) as a substrate, thus obtaining a substrate with a protective sheet.

The energy ray-curable material coating agent prepared in Example 1 was applied using a knife coater such that the thickness after drying would be 25 µm onto the release treatment-subj ected surface of a release sheet (made by LINTEC Corporation, SP-PET50C, thickness: 50 µm) obtained by applying a silicone type release agent onto one surface of a polyethylene terephthalate film, and drying was carried out for 3 minutes at 100 °C. The polycarbonate film side of the above substrate with the protective sheet was pressed onto the adhesive/curable layer thus formed, thus producing a long laminate having a width of 150 mm and a length of 100 m.

Next, using a punching apparatus (made by MARK ANDY, INC., Mark Andy 910), the protective sheet was divided into protective member portions (width: 7 mm) at both side portions in width-direction and a remainder portion at a width-direction central portion as shown in FIG. 7 (e), and then the remainder portion was peeled off and thus removed as shown in FIG. 7 (f). In this way, a protective member having a width of 7 mm, a length of 100 m, and a thickness of 70 µm was formed on both side portions in width-direction on one surface of the substrate. Both edges in width-direction of the laminated sheet obtained was then irradiated with ultraviolet rays as in Example 1. Here, in the laminated sheet, the thickness of each of the protective portions where the protective sheet was present was 170 µm, and the thickness of the target sheet was 100 µm.

The long laminated sheet of width 150 mm and length 100 m produced as described above (see FIG. 8) was rolled onto a core using the same rolling conditions as in Example 1, thus obtaining a roll (see FIG. 9).

### [Example 4]

An acrylic adhesive (made by LINTEC Corporation, M0003) was applied to a thickness of 20 µm onto a polyethylene terephthalate film (width: 7.5 mm, thickness: 25 µm) as a substrate so as to form an adhesive layer, thus obtaining an adhesive tape for forming protective members.

The energy ray-curable material coating agent prepared in Example 1 was applied using a knife coater such that the thickness after drying would be 25 µm onto the release treatment-subjected surface of a release sheet (made by LINTEC Corporation, SP-PET50C, thickness: 50 µm) obtained by applying a silicone type release agent onto one surface of a polyethylene terephthalate film, and drying was carried out for 3 minutes at 100 °C. A substrate comprising a polycarbonate film (made by TEIJIN LTD. , Pure-Ace C110-75, thickness: 75 µm) was pressed onto the adhesive/curable layer thus formed, thus producing a long laminate having a width of 150 mm and a length of 100 m.

Then, as shown in FIG. 10(d), the above adhesive tape was stuck onto an outside edge portion of each of bolstering portions as a protective member, and then the both edges in width-direction of the laminated sheet obtained were irradiated with ultraviolet rays as in Example 1. Here, in the laminated sheet, the thickness of each of the protective portions where a protective member was present was 145 µm, and the thickness of the target sheet was 100 µm.

The long laminated sheet of width 150 mm and length 100 m produced as described above (see FIG. 8) was rolled onto a core using the same rolling conditions as in Example 1, thus obtaining a roll (see FIG. 9).

### [Comparative Examples 1 to 4]

A laminated sheet was produced as in each of Examples 1 to 4, except that the irradiation with ultraviolet rays in Examples 1 to 4 was not carried out, and then the laminated sheet obtained was rolled onto a core using the same rolling conditions as in Example 1, thus obtaining a roll.

### [Test]

The rolled laminated sheet of each of Examples 1 to 4 and Comparative Examples 1 to 4 was left for 24 hours, and then a piece of aluminum foil of length 20 mm, width 20 mm, thickness 12 µm, and weight 0.013 g was pressed onto the side of the roll using a rubber roller (width 40 mm, weight 2 kg), the roll was placed side downwards, and it was checked whether or not the aluminum foil fell off under its own weight.

The results were that, for the laminated sheet of each of Examples 1 to 4, the aluminum foil fell off, and hence it was confirmed that there was no oozing out of the energy ray-curable material from the adhesive/curable layer. On the other hand, for the laminated sheet of each of Comparative Examples 1 to 4, the aluminum foil did not fall off but rather remained attached to the side of the roll, and hence oozing out of the energy ray-curable material from the adhesive/curable layer was detected.

### INDUSTRIAL APPLICABILITY

The laminated sheet and the method of producing the same according to the present invention can be favorably used in the case of a laminated sheet for which the adhesive/curable material of an adhesive/curable layer is prone to oozing out from both edges in width-direction when the laminated sheet is rolled up.

## Claims

1. A method of producing a laminated sheet comprising a long release sheet, an adhesive/curable layer that is laminated on a release treatment-subjected surface of said release sheet and has at least a portion made of an energy-ray curable material positioned at both edges in width-direction of said release sheet, and a substrate that is laminated on said adhesive/curable layer, the method of producing a laminated sheet being **characterized by**:
curing the energy ray-curable material positioned at both edges in width-direction of said adhesive/curable layer before rolling up the laminated sheet.

2. The method of producing a laminated sheet according to claim 1, **characterized in that** a protective member is provided at a desired stage on said substrate at both side portions in width-direction of said substrate or on a rear surface of said release sheet at both side portions in width-direction of said release sheet.

3. A method of producing a laminated sheet in which a target sheet of a predetermined shape comprising an adhesive/curable layer and a substrate is provided on a width-direction central portion of a release surface of a long release sheet, a protective portion having an adhesive/curable layer is provided on both side portions in width-direction of the release surface or a rear surface of said release sheet, the thickness at said protective portion is greater than the thickness at said target sheet, and at least a portion of the adhesive/curable layer of said protective portion positioned at both edges in width-direction of said release sheet is formed from an energy ray-curable material, the method of producing a laminated sheet being **characterized by**:
curing the energy ray-curable material at both edges in width-direction of the laminated sheet before rolling up the laminated sheet.

4. The method of producing a laminated sheet according to claim 3, **characterized in that** the adhesive/curable layer of said target sheet and the adhesive/curable layer of said protective portion are laminated in one step.

5. The method of producing a laminated sheet according to claim 3 or 4, **characterized in that** said protective portion is constituted from a substrate and a protective member laminated on said substrate, the substrate of said protective portion and the substrate of said target sheet being laminated in one step.

6. The method of producing a laminated sheet according to claim 2 or 5, **characterized in that** said protective member is formed by laminating on a protective sheet and cutting said protective sheet to a predetermined shape.

7. The method of producing a laminated sheet according to any of claims 1 through 6, **characterized by** comprising a step of cutting said substrate and said adhesive/curable layer to a predetermined shape, and peeling off and removing an unnecessary portion, so as to form a target sheet of a predetermined shape.

8. Themethod of producing a laminated sheet according to any of claims 1 through 7, **characterized in that** said energy ray-curable material is cured by irradiating with energy rays in a thickness direction of the laminated sheet.

9. The method of producing a laminated sheet according to any of claims 1 through 8, **characterized in that** said energy ray-curable material has a storage modulus after curing of not less than 10⁶ Pa.

10. A laminated sheet comprising:
a long release sheet;
an adhesive/curable layer that is laminated on a release treatment-subjected surface of said release sheet and a width-direction central portion of said release sheet being a main used portion;
a substrate that is laminated on said adhesive/curable layer; and
a protective member provided on said substrate at both side portions in width-direction of said substrate or on a rear surface of said release sheet at both side portions in width-direction of said release sheet;
the laminated sheet being **characterized in that** at least a portion of said adhesive/curable layer positioned at both edges in width-direction of said release sheet comprises a cured energy ray-curable material.

11. A laminated sheet comprising:
a long release sheet;
a target sheet of a predetermined shape comprising an adhesive/curable layer and a substrate, provided on a width-direction central portion of a release surface of said release sheet; and
a protective portion having an adhesive/curable layer, provided on both side portions in width-direction of the release surface or a rear surface of said release sheet;
the laminated sheet being **characterized in that**:
the thickness at said protective portion is greater than the thickness at said target sheet; and
at least a portion of the adhesive/curable layer of said protective portion positioned at both edges in width-direction of said release sheet comprises a cured energy ray-curable material.

12. The laminated sheet according to claim 11, **characterized in that** the adhesive/curable layer of said target sheet and the adhesive/curable layer of said protective portion are constituted from the same material.

13. The laminated sheet according to claim 11 or 12, **characterized in that** said protective portion is constituted from a substrate made of the same material as the substrate of said target sheet, and a protective member laminated on said substrate.

14. The laminated sheet according to any of claims 10 through 13, **characterized in that** said cured energy ray-curable material has a storage modulus of not less than 10⁶ Pa.
